# EUROPÄISCHE PATENTSCHRIFT

(11) **EP 0 881 648 B1**
(45) Veröffentlichungstag und Bekanntmachung des Hinweises auf die Patenterteilung: **16.02.2005**
(21) Anmeldenummer: 98103653.6
(22) Anmeldetag: 03.03.1998
(51) Int. Cl.: H01G 2/10

(54) **Metallgekapselter, gasisolierter Kondensator**
Metal-encapsulated, gas-insulated capacitor
Condensateur à boitier métallique et à isolation gazeuse

(30) Priorität: 14.05.1997 DE 19720088
(43) Veröffentlichungstag der Anmeldung: 02.12.1998
(73) Patentinhaber: ABB PATENT GmbH, 68526 Ladenburg (DE)
(72) Erfinder: Körber, Franz-Josef, Dipl.-Ing., 63674 Altenstadt (DE)
(74) Vertreter: Miller, Toivo

(56) Entgegenhaltungen:
- DE-A- 4 414 828
- PATENT ABSTRACTS OF JAPAN vol. 015, no. 098 (E-1042), 8. März 1991 (1991-03-08) & JP 02 308514 A (MARCON ELECTRON CO LTD), 21. Dezember 1990 (1990-12-21)
- PATENT ABSTRACTS OF JAPAN vol. 016, no. 472 (E-1272), 30. September 1992 (1992-09-30) & JP 04 168711 A (NICHICON CORP), 16. Juni 1992 (1992-06-16)

## Beschreibung

Die Erfindung betrifft einen metallgekapselten, gasisolierten Kondensator nach dem Oberbegriff des Anspruches.

JP-A-2 308 514 beschreibt einen Kondensator, der in einem Behälter angeornet und mit einem Inertgas (SF6) imprägiert ist.

Kondensatoren werden besonders bei bestimmten Schaltfällen im 60 Hz-Bereich eingesetzt, um die transienten Wiederkehrspannungen an der Klemme des Schalters zu mindern und somit das Ausschaltvermögen zu erhöhen. Dies ist in der Regel an Freileitungen der Fall, an denen die natürliche Kapazität in Höhe von 0,4 nF nicht ausreicht.

Bei Leistungsschaltern für hohe Kurzschlußströme oder bei 60 Hz-Netzen muß zum Abschalten hoher Ströme ein Parallelkondensator vorgesehen sein, der die transienten Wiederkehrspannungen so günstig beeinflußt, daß der Schalter löschen kann.

Bei solchen Freileitungsschaltanlagen werden bei ca. 10 % bis 15 % aller Felder die Kondensatoren in Kerzen eingebaut und senkrecht aufgestellt, was oft aus Platzgründen nicht möglich ist. Für die Leitungen von der metallgekapselten Schaltanlage zu einer Freileitung muß auch ein Spezialisolator vorgesehen sein, in dem die Kondensatoren eingebaut sind.

Aufgabe der Erfindung ist es, einen Kondensator der eingangs genannten Art zu schaffen, der in eine mehrphasige gasisolierte Schaltanlage (GIS) einfach eingebaut werden kann.

Diese Aufgabe wird erfindungsgemäß durch die kennzeichnenden Merkmale des Anspruches 1 gelöst.

Eine weitere Ausgestaltung der Erfindung ist dem Anspruch 2 zu entnehmen.

Der erfindungsgemäße Kondensator läßt sich kostengünstig in die Metallkapselung einer gasisolierten Schaltanlage einsetzen und am Ende von Sammelschienen oder freien Leistungsschalterflanschen in die Schaltanlage integrieren, so daß im Anschlußbereich der Übergangsisolierkörper zu den Freileitungen keine Einschränkungen der Bauweise bzw. der Disposition zu erfolgen braucht.

Anhand der Zeichnung, in der ein Ausführungsbeispiel der Erfindung dargestellt ist, sollen die Erfindung sowie weitere vorteilhafte Ausgestaltungen und Verbesserungen der Erfindung näher erläutert und beschrieben werden.

Es zeigen:
- Fig. 1: eine Querschnittsansicht parallel zur Längserstreckung, und
- Fig. 2: eine Schnittansicht gemäß Schnittlinie II-II der Fig. 1.

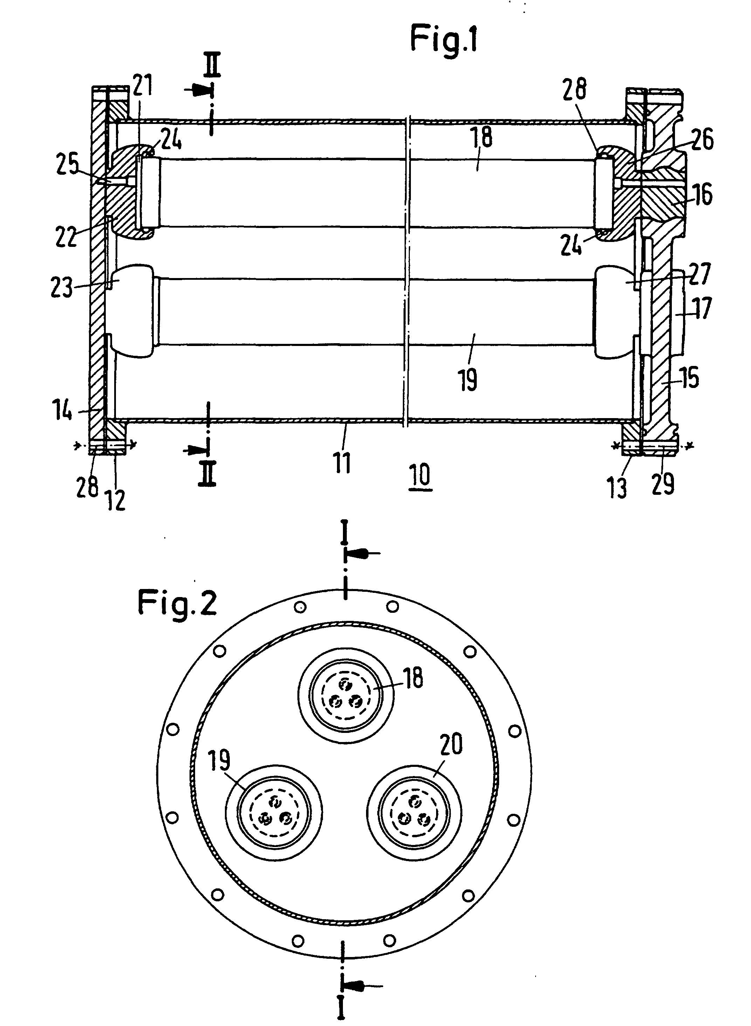

Ein Kondensator 10 für eine dreiphasige, metallgekapselte und gasisolierte Schaltanlage besitzt ein Standardrohr, wie es bei gasisolierten metallgekapselten Schaltanlagen üblich ist. An beiden Enden des Rohres 11 ist je ein Flansch 12, 13 angeschweißt. Der in der Zeichnung links befindliche Flansch 12 ist mittels eines Metalldeckels 14 verschlossen, wogegen an dem rechten Flansch 13 ein Schottisolator 15 befestigt ist, der eine der Anzahl der Phase entsprechende Anzahl von Durchführungen 16, 17 aufweist; die dritte Durchführung ist in der Fig. 1 nicht dargestellt.

Innerhalb des Rohres 11 befinden sich drei Kondensatorelemente 18, 19 und 20, die als handelsübliche Kondensatorelemente frei im Handel erhältlich sind.

An der Innenseite der Metallplatte 14 sind drei eine napfförmige Vertiefung 21 aufweisende Anschlußelemente 22, 23 befestigt; in die Vertiefung 21 ist das linke Ende der Kondensatorelemente 18 eingesetzt und mit den Anschlußelementen 22, 23 über Spiralkontaktelemente 24 elektrisch leitend verbunden. Die Anschlußelemente 22, 23 sind mittels einer Schraubverbindung 25 an der Metallplatte elektrisch leitend fixiert. Die Metallplatte 14 befindet sich an Erde.

An den Durchführungen 16, 17 sind ebenfalls Anschlußelemente 26, 27 befestigt, die napfförmige Vertiefungen 28 aufweisen, die den Vertiefungen 21 gleichen. Die elektrisch leitende Verbindung zwischen den Kondensatorelementen 18, 19 und den Anschlußelementen 26, 27 erfolgt auch hier mittels der Spiralfederkontaktelemente, die die gleiche Bezugsziffer 24 besitzen.

Die drei Kondensatorelemente 18, 19 und 20 sind an der Spitze eines gleichseitigen Dreieckes angeformt, wie aus der Fig. 2 ersichtlich ist.

Zur Verbindung der Flansche 12 bzw. 13 mit der Metallplatte 14 bzw. dem Schottungsisolator 15 sind am Umfang verteilte Schraubenverbindungen 28, 29 vorgesehen; mit den Schraubenverbindungen 29 kann der Kondensator 10 an einem Flansch einer gasisolierten Schaltanlage befestigt werden.

## Patentansprüche

1. Metallgekapselter, gasisolierter Kondensator (10), mit einem rohrförmigen Kapselungskörper, der an einem Ende mit einer Metallplatte (14) und am anderen Ende mit einem Schottisolator (15) verschlossen ist, **dadurch gekennzeichnet, daß** drei Kondensatorelemente (18, 19, 20) an der Metallplatte (14) und an je einer Leiterdurchführung (16, 17) im Schottisolator (15) elektrisch leitend fixiert sind.

2. Kondensator nach Anspruch 1, **dadurch gekennzeichnet, daß** zur Fixierung Anschlußelemente (22, 23; 26, 27) an der Metallplatte (14) und an den Leiterdurchführungen (16, 17) befestigt sind, die Vertiefungen (21, 28) aufweisen, in denen die Enden der Kondensatorelemente (18, 19, 20) aufgenommen sind, wobei Spiralfederkontaktelemente (24) zur Kontaktierung vorgesehen sind.

## Claims

1. Metal-encapsulated, gas-insulated capacitor (10), having a tubular encapsulation body, which is closed at one end by a metal plate (14) and at the other end by a compartment isolator (15), **characterized in that** three capacitor elements (18, 19, 20) are electrically conductively fixed on the metal plate (14) and in each case one conductor bushing (16, 17) in the compartment isolator (15).

2. Capacitor according to Claim 1, **characterized in that**, for fixing purposes, connecting elements (22, 23; 26, 27) are attached to the metal plate (14) and to the conductor bushings (16, 17) and have depressions (21, 28) in which the ends of the capacitor elements (18, 19, 20) are held, with spiral spring contact elements (24) being provided in order to make contact.

## Revendications

1. Condensateur (10) sous enveloppe métallique à isolation gazeuse comportant un corps d'enveloppe tubulaire, fermé à une extrémité par une plaque métallique (14) et à son autre extrémité par un isolateur formant cloison étanche (15), **caractérisé par le fait que** trois éléments de condensateur (18, 19, 20) sont fixés de manière conductrice du courant électrique à la plaque métallique (14) et chacun à un passage de conducteur (16, 17) dans l'isolateur (15) formant cloison étanche.

2. Condensateur selon la revendication 1, **caractérisé par le fait que** pour la fixation, des éléments de liaison (22, 23 ; 26, 27) comportant des cavités (21, 28) dans lesquelles sont insérées les extrémités des éléments de condensateur (18, 19, 20), sont fixés à la plaque métallique (14) et aux passages de conducteur (16, 17), des éléments de contact en forme de ressort spirale (24) étant prévus pour assurer le contact.
